# EUROPÄISCHE PATENTSCHRIFT

(11) **EP 2 219 925 B1**
(45) Veröffentlichungstag und Bekanntmachung des Hinweises auf die Patenterteilung: **25.11.2015**
(21) Anmeldenummer: 08858624.3
(22) Anmeldetag: 11.12.2008
(51) Int. Cl.: B60W 50/16, B62D 15/02

(54) **ROUTENFÜHRUNGSASSISTENZ DURCH MOMENTUNTERSTÜTZUNG AM LENKRAD**
ROUTE GUIDANCE ASSISTANCE BY ASSISTING THE MOMENT ON THE STEERING WHEEL
ASSISTANCE AU GUIDAGE ROUTIER PAR ASSISTANCE DU COUPLE AU NIVEAU DU VOLANT DE DIRECTION

(30) Priorität: 11.12.2007 DE 102007059832; 11.12.2008 DE 102008061302
(43) Veröffentlichungstag der Anmeldung: 25.08.2010
(73) Patentinhaber: Continental Teves AG & Co. oHG, 60488 Frankfurt (DE)
(72) Erfinder: STÄHLIN, Ulrich, 65670 Eschborn (DE); STRAUSS, Matthias, 64319 Pfungstadt (DE)
(74) Vertreter: Bobbert, Christiana
(86) Internationale Anmeldenummer: PCT/EP2008/067360
(87) Internationale Veröffentlichungsnummer: WO 2009/074663

(56) Entgegenhaltungen:
- EP-A- 1 491 429
- DE-A1- 10 212 782
- DE-A1- 10 261 176
- DE-A1- 19 948 913
- DE-A1-102005 032 528
- DE-A1-102006 000 326
- US-A1- 2007 164 852

## Beschreibung

### Gebiet der Erfindung

Die Erfindung betrifft die Fahrerassistenztechnik für Fahrzeuge. Insbesondere betrifft die Erfindung eine Vorrichtung und ein Verfahren zur Routenführungsassistenz eines mit einem Navigationssystem verbundenen Fahrzeuges sowie ein computerlesbares Speichermedium und ein Computerprogrammelement zur Ausführung des Verfahrens.

### Technologischer Hintergrund

Assistenzvorrichtungen für Kraftfahrzeuge haben ein hohes Potenzial zur Verbesserung von Verkehrssicherheit, Fahrkomfort und Ressourceneinsparung. Daher werden in modernen Kraftfahrzeugen zunehmend Assistenzsysteme eingesetzt, die den Fahrer im Fahrbetrieb unterstützen. Dabei unterscheidet man zwischen passiven Assistenzsystemen und aktiv in den Fahrerprozess eingreifenden Technologien wie z.B. ESP (Elektronisches Stabilitätsprogramm) oder Spurhalteassistenzen (lane departure warning). Weitere bei der Steuerung des Fahrzeuges unterstützende Fahrerassistenzsysteme sind ABS (Anti-Blockier-System), ASR (Antriebs-Schlupf-Regelung) oder EDS (Elektronische Differentialsperre).

Zur Steigerung des Fahrkomforts werden Navigationssysteme als Fahrerassistenzsysteme eingesetzt. Dabei wird der Fahrer entlastet, indem durch Lokalisation per GPS (Global Positioning System) die nötigen Abbiegevorgänge bis zum eingestellten Zielpunkt angezeigt und/oder angesagt werden. Auf diese Weise kann ein Navigationssystem, das in einem Kraftfahrzeug eingebaut ist, Fahrtempfehlungen ausgeben, wenn zuvor ein Zielort in das Navigationssystem eingegeben bzw. programmiert oder gespeichert wurde. Navigationssysteme geben in der Regel die vom Navigationscomputer berechneten Routenführungen optisch und/oder akustisch aus. Führungsanweisungen werden insbesondere bei Annäherung des Fahrzeuges an Entscheidungspunkten, also insbesondere Kreuzungen oder ähnliches ausgegeben. Typische vom Navigationssystem ausgegebene Führungsanweisung wie z.B. "nach 50 Metern links abbiegen" beruhen auf Entfernungsangaben.

Für den Fahrzeugführer ergibt sich das Problem, Entfernungen exakt einschätzen und einen Kreuzung oder ähnliches korrekt identifizieren zu müssen. Vor allem in den Hauptverkehrszeiten im Stadtverkehr, an unübersichtlichen Kreuzungen sowie bei mehrspurigen Straßen können die von Navigationssystemen üblichen Hilfen nicht ausreichend sein. Während bei einer Überlandfahrt mit wenigen Kreuzungen das Ziel problemlos erreicht werden kann, wird insbesondere bei Städten, bei denen viele Kreuzungen oder Einmündungen auf engem Raum vorhanden sein können, ein Folgen der Routenführung nur mit erhöhter Konzentration des Fahrzeugführers möglich sein. Mögliche Unaufmerksamkeiten oder falsch verstandene Anweisungen können zu Umwegen oder unerwartetem Fahrverhalten, wie plötzliches Abbremsen, aufgrund zu spätem oder frühen Abbiegen führen. Dabei können vor allem die akustischen Ansagen falsch verstanden werden, da die Ansagen für den individuellen Fahrer zu spät oder zu früh gemeldet werden. Ferner kann insbesondere zu Beginn der Nutzung eines Navigationssystems die akustische sowie visuelle Routenführung vom Fahrer missverstanden werden, wenn sich die Navigationssysteme je nach Hersteller oder Version unterscheiden.

DE 10 212 782 A1 beschreibt ein Kraftfahrzeug mit einem Navigationssystem, das dem Fahrer des Fahrzeugs angibt, wann er von der aktuell befahrenen Strasse durch geeignetes Betätigen eines Lenkrads oder dgl. in eine abzweigende Strasse abbiegen sollte, um ein von ihm vorgegebenes Ziel zu erreichen. Kurz vor dem Erreichen der Abzweigung wird an das Lenkrad selbsttätig ein pulsierendes Drehmoment oder Verstellmoment angelegt.

DE 102 61 176 A1 beschreibt eine Verrichtung zur Unterstützung des Fahrersn eines Fahrzeuges bei der durchführung eines Einparkmanövers.

### Zusammenfassung der Erfindung

Als eine Aufgabe der vorliegenden Erfindung kann betrachtet werden, gegenüber bekannten Navigationssystemen eine verbesserte Ausgabe von Führungsanweisungen an den Fahrzeugführer bereitzustellen, um dem Fahrer ein Folgen einer von dem Navigationssystem berechneten Route zu erleichtern. Die Aufgabe der Erfindung wird gelöst durch den Gegenstand der unabhängigen Ansprüche, weitere Ausführungsformen werden in den abhängigen Ansprüchen verkörpert. Die im Folgenden beschriebenen Ausführungsbeispiele der Erfindung betreffen gleichermaßen die Assistenzvorrichtung, das System, das Verfahren, das Computerprogrammelement und das computerlesbare Speichermedium. In anderen Worten lassen sich die im Hinblick auf die Assistenzvorrichtung genannten Merkmale auch in dem System, dem Verfahren, dem Programmelement oder dem computerlesbaren Medium implementieren und umgekehrt. Gemäß einer beispielhaften Ausführungsform der Erfindung wird eine Assistenzvorrichtung zur Routenführung eines mit einem Navigationssystem verbundenen Fahrzeuges bereitgestellt, wobei die Assistenzvorrichtung eine Steuereinheit zum Erzeugen eines Steuersignals für eine haptische Rückmeldung an den Fahrer des Fahrzeuges aufweist und die haptische Rückmeldung dem Fahrer ein Folgen einer von dem Navigationssystem berechneten Route erleichtert.

Die erfindungsgemäße Assistenzvorrichtung kann somit einen Fahrzeugführer mittels haptisch ausgegebenen

Führungsanweisungen entlang einer zuvor berechneten Route in Richtung eines benutzerdefinierten Ziels führen. Dabei kann der Fahrer durch Menüeinstellungen des Navigationssystems eingeben, ob er die Leithinweise für eine bestimmte Zielführung nur haptisch rückgemeldet bekommt oder unter Hinzunahme von visuellen oder akustischen Leithinweisen. Da der visuelle und auditive Sinn des Menschen in vielen Situationen bereits überlastet ist, ist es vorteilhaft den Tastsinn zur gezielten Informationsübertragung zu nutzen. Auf diese Weise trägt die Erfindung zu einer geringeren Ablenkung des Fahrzeugführers vom Straßenverkehr durch die Anweisungen des Navigationssystems und somit zur Verkehrssicherheit bei.

Ferner besteht die Möglichkeit für den Fahrzeugführer die haptischen Rückmeldungen nur bestimmten Entscheidungspunkten wie Abbiegemanöver und/oder Spurwechsel zuzuordnen. Dabei verhält sich eine haptische Rückmeldung, d.h. eine haptische Reaktion im Fahrzeug bei beispielsweise Linksabbiegemanövern entgegengesetzt bzw. für den Fahrer leicht unterscheidbar zu der haptischen Reaktion im Rechtsabbiegemanöver. So kann der Ort eines taktilen Reizes die Richtung anzeigen (rechter oder linker Fuß über Fahrzeugboden oder rechtes oder linkes Bein über Fahrersitzfläche), während die Reizfrequenz die Entfernung zur Abbiegestelle anzeigen kann.

Bei dem Fahrzeug handelt es sich beispielsweise um ein Kraftfahrzeug, wie ein Auto, ein Bus oder Lastkraftwagen, oder aber auch um ein Schienenfahrzeug, ein Schiff, ein Luftfahrzeug, wie Helikopter oder Flugzeug.

Gemäß einem weiteren Ausführungsbeispiel der Erfindung ist eine Assistenzvorrichtung angegeben, wobei die haptische Rückmeldung eine Vibration des Lenkrades aufweist.

Dabei erzeugt die Steuereinheit der Assistenzvorrichtung eine haptische Rückmeldung durch eine Vibration (beispielsweise mit Hilfe eines entsprechenden Aktuators) mit einer bestimmten Amplitude und Frequenz, welche zu den normalen Lenkradfunktionen addiert wird und so vom Fahrer haptisch wahrgenommen wird. Zusätzlich kann die Vibration nur erzeugt werden, wenn sich das Fahrzeug in einer unkritischen Fahrsituation befindet wie. z.B. bei Einhalten bestimmter Geschwindigkeiten wie Stadtgeschwindigkeiten. Ferner kann vorab oder bei der Einleitung eines Abbiegemanövers entsprechend der berechneten Richtung ein spezifisches Signal ausgegeben werden, indem z.B. nur die rechte bzw. linke Lenkradseite ein haptisches Signal erzeugt.

Zudem ist vorteilhaft vorgesehen, dass ein Rütteln des Lenkrades den Fahrer beim Abweichen der benutzerdefinierten Route warnen kann. Dieser "Rütteleffekt" kann dem Fahrer das Gefühl vermitteln, dass er wie in einer Rinne fährt. Auf diese Weise wird der Fahrer aufgefordert, die Spur bzw. Fahrtroute nicht zu verlassen.

Erfindungsgemäß weist die haptische Rückmeldung ein Zusatzmoment (M_{Z}) auf die Lenkung des Fahrzeuges auf, welches beispielsweise mit Hilfe eines Servomotors erzeugt wird.

Durch die Aufschaltung eines Moments auf die Lenkung wird das Folgen der geplanten Route erleichtert. Dabei erfolgt die Routenführung dadurch, dass durch eine Positionssensorik der aktuelle Standort des Fahrzeugs ermittelt wird und mit der Route verglichen wird. Beim Abweichen bzw. korrekten Folgen der Route und damit der berechneten Fahrmanöver, wie Abbiegen, Wenden oder Spur wechseln, wird durch Veränderung des Lenkmomentniveaus an den Fahrzeugführer ein haptisches Signal ausgegeben. Diese Leitsignale können kontinuierlich oder diskontinuierlich an den Fahrer übermittelt werden. Bei einer diskontinuierlichen Signaleinstellung kann bei Annäherung an einen vom Navigationssystem berechneten Entscheidungspunkt wie z.B. Kreuzung die Frequenz der Signalausgabe erhöht werden.

Die Lenkeinrichtung kann beispielsweise mit einer elektrischen Servolenkung (EPAS; Electric Power Assisted Steering) versehen oder auch als Steer-By-Wire bzw. Fly by Wire-System ausgeführt sein. Diese Technologien weisen vorteilhafterweise Aktoren auf, die eine Implementierung einer haptischen Rückmeldung erlauben.

Erfindungsgemäß fügt die Steuereinheit der Assistenzvorrichtung bei einer Abweichung von der berechneten Route ein negatives Zusatzmoment (M_{Z} < 0)auf die Lenkung hinzu derart, dass zur Beibehaltung oder Erhöhung des Lenkmoments ein höheres manuelles Moment in die Lenkung eingeleitet werden muss.

Auf diese Weise kann ähnlich wie beim "Rütteleffekt" dem Fahrer das Gefühl einer virtuellen "Fahrbahnrinne" vermittelt werden, wobei die "Fahrbahnrinne" mit der berechneten Fahrbahn bzw. Fahrtroute des Navigationssystems übereinstimmt. Dabei kann ein Servoantrieb mit einem Elektromotor zu Realisierung der Lenkmomentänderung dienen, indem die Steuereinheit der Assistenzvorrichtung auf das elektrische Lenkssystem (EPAS) ein negatives Zusatzmoment, wie ein virtuelles "Gewicht" auf das Lenkrad aufschalten kann. Die Regelung bewirkt ein Erhöhen des manuellen Momentes des Fahrers, wenn ein Verlassen der Fahrtroute von der Steuereinheit berechnet wurde. Dabei kann das zusätzliche Handmoment zum Erreichen des gleichen Lenkwinkels proportional zur Abweichung von der berechneten Fahrtroute eingestellt werden.

Gemäß einem weiteren Ausführungsbeispiel ist die Steuereinheit der Assistenzvorrichtung ausgelegt, in Richtung der berechneten Route ein positives Zusatzmoment (M_{Z} > 0)auf die Lenkung zur Erleichterung der Lenkung des Fahrzeuges hinzuzufügen.

Auf diese Weise kann der Fahrer unterstützt werden, um mit einer gezielten, unterstützenden Lenkmomentänderung der Fahrtroute zu folgen bspw. die berechnete Spur zu halten. Beispielsweise werden bei einem Abbiegemanöver nach links linksgerichtete Lenkmanöver erleichtert. Zudem kann vorteilhaft nach einem möglichen Abkommen von der berechneten Fahrtroute mit einem unterstützenden positiven Zusatzmoment leichter in die Spur d.h. auf die geforderte Fahrtroute zurückgefunden werden.

Erfindungsgemäß ist die Steuereinheit der Assistenzvorrichtung ausgelegt, ein positives Zusatzmoment (M_{Z} > 0) vor und während vom Navigationssystem berechneter Manöver auszugeben, wobei die Manöver ausgewählt sind aus einer Gruppe bestehend aus einem Lenkwinkel (δ) größer als ein benutzerdefinierter Grenzwert, einem Abbiegemanöver und einem Spurwechsel.

Auf diese Weise können positive Lenkradunterstützungen an bestimmte Entscheidungspunkte, die vom Navigationssystem berechnet wurden, gekoppelt werden. Hierbei kann der Fahrer über eine geeignete Mensch-Maschine Schnittstelle z.B. der Menüführung des Navigationssystem Grenzwerte bzw. bestimmte Manöver eingeben. So kann der Fahrer beispielsweise wählen, dass erst ab einem einzuschlagenden Lenkwinkel δ größer 30° eine positives Zusatzmoment an den Fahrer übermittelt wird. Der genannte Schwellwert von 30° ist als Beispiel zu sehen und kann beliebig angepasst werden. Dabei kann der Fahrer auch entscheiden, ob und in welchen Abständen zum Entscheidungspunkt er vorab einen Leithinweis über ein positives Zusatzmoment von der Assistenzvorrichtung erhalten möchte. Neben zu berechnenden Fahrmanövern wie Spurwechsel und Abbiegemanövern können je nach Fahrerwunsch zusätzliche Entscheidungspunkte eingegeben werden. Anstelle einer Eingabe vom Fahrer können die oben genannten Manöver bereits als vorbestimmte Kriterien von einer Speichereinheit der Assistenzvorrichtung aufrufbar sein.

Gemäß einem weiteren Ausführungsbeispiel der Erfindung weist die Assistenzvorrichtung eine Navigationssystemschnittstelle aus, die ausgelegt ist als Eingangsschnittstelle zum Empfang vom Navigationssystem berechneten aktuellen Fahrtroutenparameterschnittstelle (x_{N}, y_{N}, x_{N}', y_{N}', x_{N}", y_{N}") sowie eine Fahrzeugschnittstelle, die ausgelegt ist als Eingangsschnittstelle zum Empfang von Fahrzeugparametern wie Ort-Zeit-Zustandsinformation (x_{F}, y_{F}, x_{F}', y_{F}', x_{F}", y_{F}"), Lenkwinkel δ_{F} und Lenkmoment M_{F} eines Fahrzeuges.

Über die Navigations- und/oder Fahrzeugschnittstelle können beispielsweise die Positionsdaten des Fahrzeuges an die Steuereinheit übertragen werden. Das Navigationssystem verwendet seinerseits die Positionsdaten, um es mit den Informationen von digitalen Karten abzugleichen. Auf diese Weise kann eine sinnvolle Routenberechnung vom aktuellen Standort zum Fahrtziel und die Zielführung bestimmt werden. Die von der Navigation berechneten aktuellen Fahrtroutenparameter (x_{N}, y_{N}, x_{N}', y_{N}', x_{N}", y_{N}") können über die Schnittstelle von der Steuereinheit zur weiteren Verarbeitung empfangen werden.

Vorteilhafter Weise können auch die verschiedenen Fahrzeugparameter (x_{F}, y_{F}, x_{F}', y_{F}', x_{F}", y_{F}"), Lenkwinkel δ_{F} und Lenkmoment M_{F} empfangen werden. Auf diese Weise kann die Fahrtsituation des Fahrzeuges beschrieben werden. Die Fahrgeschwindigkeit x_{F}',y_{F}' wird durch einen Sensor beispielsweise ein Tachometer oder die Signale der Raddrehzahlsensoren ermittelt. Unter die Beschleunigungsdaten x_{F}",y_{F}" fallen beispielsweise auch die Querbeschleunigung eines Fahrzeuges, die von einem EPS-Unterstützungssystem ausgegeben werden kann. Alle aufgenommenen Fahrzeugparameter werden der Recheneinheit bzw. Steuereinheit zugeführt.

Gemäß einem weiteren Ausführungsbeispiel der Erfindung weist die Assistenzvorrichtung eine Umfeldsensorenschnittstelle auf, die ausgelegt ist, Ort-Zeit-Zustandsinformationen (x_{U}, y_{U}, x_{U}',y_{U}',x_{U}",y_{U}") eines potentiellen Hindernisses zu empfangen.

Mit Hilfe der Umfeldsensorenschnittstelle können auf vorteilhafte Weise Informationen über Position, Bewegung, Relativgeschwindigkeit und Beschleunigung von Objekten bezüglich einer ermittelten bzw. berechneten Position des Eigenfahrzeuges ermittelt werden. Systeme der Umfeldsensorik weisen üblicherweise Videosensoren, Infrarotsensoren, Ultraschallsensoren, Radar oder Lidar auf. Beispielsweise kann ein Radarsensor den vorderen Bereich und Rückraum des Fahrzeuges so überwachen, dass eine Steuereinheit des Assistenzvorrichtung über die Umfeldsensorenschnittstelle Ort Relativgeschwindigkeit, sowie Beschleunigung x_{U}, y_{U}, x_{U}',y_{U}' x_{U}",y_{U}" eines beweglichen Hindernisses übermittelt kann. Wenn beim Rechtsabbiegen beispielsweise ein Fahrzeug auf der Fahrradspur geortet wird, würde die Fahrtroutenberechnung unter Berücksichtigung des Hindernisses korrigiert werden und keine Abbiegeempfehlung mehr ausgegeben.

Gemäß einem weiteren Ausführungsbeispiel weist die Assistenzvorrichtung eine Steuereinheit (11) auf, die ausgelegt ist, die Fahrzeugparameter (x_{F}, y_{F}, x_{F}', Y_{F}', x_{F}", Y_{F}", δ_{F}, M_{F}) und Daten eines potentiellen Hindernisses (x_{U}, y_{U}, x_{U}', y_{U}', x_{U}", y_{U}") relativ zu den berechneten Fahrtroutenparametern (x_{N}, y_{N}, x_{N}', y_{N}', x_{N}", y_{N}") auszuwerten und Lenkparameter wie routenspezifischer Lenkwinkel δ_{N} und Zusatzmoment M_{Z} zu ermitteln und nur ein Steuersignal an eine Stelleinheit der Lenkung des Fahrzeuges über eine Ausgangsschnittstelle auszugeben, wenn die Umfeldsensorendaten (x_{U}, y_{U}, x_{U}', y_{U}', x_{U}", y_{U}") kein Hindernis auf der berechneten Fahrtroute ermittelt haben.

Auf diese Weise können auf Grundlage der von der Steuereinheit empfangenen Daten ein routenspezifischer Lenkwinkel δ_{N} berechnet werden, der in der aktuellen Fahrsituation erforderlich ist, um das Fahrzeug auf der berechneten Fahrtroute zu führen. Somit kann die Steuereinheit die Differenz zwischen dem berechneten Lenkwinkel δ_{N} und dem vom Fahrer gestellten Lenkwinkel δ_{F} berechnen. Das von der Assistenzvorrichtung zusätzlich aufzubringende Stellmoment wird dann in Abhängigkeit dieser Lenkwinkeldifferenz mit Hilfe eines Stellgliedes eingeregelt und dem vom Fahrer über das Lenkrad ausgeübten Handmoment M_{H} additiv überlagert.

Zudem können in vorteilhafter Weise die Daten der Umfeldsensoren als Prüfdaten verwendet werden. Wird auf der berechneten Zielroute ein stehendes oder bewegliches potentielles Hindernis geortet, soll kein Zusatzmoment mehr auf das Lenkrad gegeben werden. Gegebenenfalls kann eine Warnung mittels einer haptischen Rückmeldung wie eine Vibration am Lenkrad erfolgen. Ergibt die Validierung der Fahrtroute, dass beispielsweise eine Zufahrt durch ein Baustellenfahrzeug behindert wird, kann die Steuereinheit über die Navigationsschnittstelle diese Information an das Navigationssystem weiterleiten, damit eine neue Zielführung berechnet werden kann. Erst wenn erneut validierte Daten bezüglich der Zielroute der Steuereinheit zur Verfügung gestellt werden, kann ein Zusatzmoment an den Fahrer weitergeben werden.

Ferner kann die Stärke des Zusatzmomentes nicht nur von der Lenkwinkeldifferenz sondern auch von der Fahrgeschwindigkeit des Fahrzeuges abhängig sein. Aus Sicherheitsgründen kann das Zusatzmoment verringert werden, wenn die Geschwindigkeit des Fahrzeuges zunimmt.

Gemäß einem weiteren Ausführungsbeispiel der Erfindung ist die Steuereinheit der Assistenzvorrichtung ausgelegt, die Ausgabe eines positiven Zusatzmomentes (M_{Z} > 0)an die Ausgangsschnittstelle zu blockieren, wenn eine Maximalgeschwindigkeit (xₘₐₓ', yₘₐₓ') überschritten wurde.

Das Einführen einer Maximalgeschwindigkeit dient der Sicherheit des Fahrers, da somit die physikalischen Grenzen des Fahrzeuges eingehalten werden können. So wird beispielsweise bei einer sportlichen Fahrweise eine Lenkmomentänderung blockiert, da ansonsten die Gefahr besteht, dass der Fahrer durch Verreißen des Lenkrades die Kontrolle über sein Fahrzeug verliert. Zudem kann von Komponenten der Fahrdynamikregelung wie z.B. einem elektronischen Stabilitätsprogramm (ESP) ein geeigneter Grenzwert in der Steuereinheit gespeichert werden, bei dem die Lenkradunterstützung blockiert wird. Zudem besteht die Möglichkeit, dass anstelle der Lenkradunterstützung eine Vibration erzeugt wird, um den Fahrzeugführer anzuzeigen, dass ein Grenzwert erreicht worden ist. Auf diese Weise kann der Fahrer vor einer kritischen Situation gewarnt werden.

Gemäß einem weiteren Ausführungsbeispiel der Erfindung wird eine Assistenzvorrichtung bereitgestellt, wobei die haptische Rückmeldung über ein aktives Gaspedal erfolgt. Das Gaspedal kann dabei dem Fahrerfuß eine Kraft entgegen setzen oder die notwendige Kraft zum Drücken des Gaspedals verringern oder ein Rütteln auf das Gaspedal geben. Über ein Rütteln kann dem Fahrer z.B. angezeigt werden, dass er in Kürze Abbiegen muss. Ebenso kann hierfür eine Gegenkraft im Gaspedal verwendet werden, da typischerweise vor einer Kurve auch die Geschwindigkeit reduziert werden muss.

Gemäß einem weiteren Ausführungsbeispiel der Erfindung wird ein Assistenzsystem angegeben mit einer Assistenzvorrichtung, wobei das Assistenzsystem ein Navigationssystem, ein Positionsbestimmungssystem, Fahrzeugsensoren und einen Servomotor aufweist.

Durch die Integrationsmöglichkeit der genannten Sensor- und Systemkomponenten in einem Assistenzsystem kann auf bereits vorhandene Informationsquellen und Schnittstellen wie Fahrzeugsensorik oder Fahrzeugsysteme zurückgegriffen werden und es besteht die Möglichkeit einer effizienten Vernetzung der Systeme. Auf diese Weise wird ein Assistenzsystem als unabhängige Einzellösung bzw. sogenannte Insellösung vermieden.

Als Positionsbestimmungssystem wird zumeist ein GPS-Empfänger verwendet. GPS steht stellvertretend für sämtliche Globale Navigationssatellitensysteme (GNSS), wie z.B. GPS, Galileo, GLONASS (Russland), COMPASS (China) oder IRNSS (Indien). An dieser Stelle sei darauf hingewiesen, dass die Positionsbestimmung des Fahrzeuges nicht nur über GPS sondern auch über eine Zellpositionierung erfolgen kann. Dies bietet sich insbesondere bei der Verwendung von GSM-, UMTS- oder LTE-Netzen bzw. WiMAx-Netzen an. Auch eine Positionierung mittels WLAN ist möglich.

Gemäß einem weiteren Ausführungsbeispiel der Erfindung wird ein Kraftfahrzeug mit einer erfindungsgemäßen Assistenzvorrichtung angegeben.

Gemäß einem weiteren Ausführungsbeispiel der Erfindung weist das Assistenzverfahren zur Routenführung eines mit einem Navigationssystem verbundenen Fahrzeuges das Erzeugen eines Steuersignals für eine haptische Rückmeldung an den Fahrer des Fahrzeuges auf, wobei die haptische Rückmeldung dem Fahrer ein Folgen einer von dem Navigationssystem berechneten Route erleichtert.

Gemäß einem weiteren Ausführungsbeispiel der Erfindung weist das Assistenzverfahren zum einem das Erfassen einer entsprechend der Fahrtroute berechneten Ort-Zeit-Zustandsinformation des Fahrzeuges vom Navigationssystem (x_{N}, y_{N}, x_{N}', y_{N}', x_{N}", y_{N}") auf, zum anderen das Erfassen einer Ort-Zeit-Zustands-Information (x_{F}, y_{F}, x_{F}', y_{F}', x_{F}", y_{F}") sowie Lenkparameter (δ_{F}, M_{F}) eines Fahrzeuges. Ferner weist das Assistenzverfahren ein Auswerten der erfassten Ort-Zeit-Zustandsinformation des Navigationssystems (x_{N}, y_{N}, x_{N}', y _{N}', x_{N}", y_{N}") und der Fahrzeugparameter (x_{F}, y_{F}, x_{F}', y_{F}', x_{F}", y_{F}", δ_{F}, M_{F}) auf und ein Ermitteln und Ausgeben eines Zusatzmomentes (M_{Z}) auf die Lenkung des Fahrzeuges, wobei das Zusatzmoment bei einer Abweichung von der Fahrtroute negativ ist (M_{Z} < 0) und beim Folgen der berechneten Richtung der Navigationsroute positiv (M_{Z} > 0) ist.

Gemäß einem weiteren Ausführungsbeispiel der Erfindung wird ein Computerprogrammelement bereitgestellt, das wenn es durch einen Prozessor ausgeführt wird, ausgelegt ist, das erfindungsgemäße Verfahren auszuführen. Dabei kann das Computerprogrammelement beispielsweise auf einem Mikroprozessor einer Steuereinheit sein, die ausgelegt ist die Momentunterstützung des Lenkrades zu steuern. Die Steuereinheit, die u.a. die Auswerteelektronik beinhaltet, kann beispielsweise durch ein elektronisches Datenverarbeitungssystem mit einem oder mehreren Mikroprozessoren und zugehöriger Software gebildet werden.

Gemäß einem weiteren Ausführungsbeispiel der Erfindung ist ein computerlesbares Speichermedium angegeben, auf dem das erfindungsgemäße Computerprogrammelement gespeichert ist, das, wenn es auf einem Prozessor ausgeführt wird, den Prozessor anleitet, die folgenden Verfahrensschritt auszuführen: Erzeugen eines Steuersignals für eine haptische Rückmeldung an den Fahrer des Fahrezeuges, wobei die haptische Rückmeldung dem Fahrer ein Folgen einer von dem Navigationssystem berrecnetetn Route erleichtert. Als Speichermedium für das Computerprogrammprodukt kommen beispielsweise Disketten, CDs, DVDs, Festplatten, USB-Memory-Sticks, Flash-Speicher oder ähnliches in Betracht. Ferner kann das Computerprogramelement auf einem Internetserver gespeichert sein und von dort aus in das Speicherelement des Steuergerätes übertragen werden.

Im Folgenden werden mit Verweis auf die Figuren Ausführungsbeispiele der Erfindung beschrieben.
Fig. 1 zeigt eine schematische Darstellung einer Ausführungsform der erfindungsgemäßen Assistenzvorrichtung.
Fig. 2 zeigt schematisch einen Kartenausschnitt zur Erläuterung von zwei möglichen Zusatzmomenten anhand eines beispielhaften Abbiegemanövers.
Fig. 3 zeigt eine schematische Darstellung eines vom der Assistenzvorrichtung nicht unterstützten Spurwechselmanövers und die Funktion des negativen Zusatzmomentes in Abhängigkeit von der Fahrzeugposition relativ zur Routenspur.
Fig. 4 zeigt ein Flussdiagramm eines Verfahrens gemäß einem Ausführungsbeispiel der Erfindung.

Die Darstellungen in den Figuren sind schematisch und nicht maßstäblich.

### Detaillierte Beschreibung der Zeichnungen

In den folgenden Figurenbeschreibungen werden für die gleichen oder ähnlichen Elemente die gleichen Bezugsziffern verwendet.

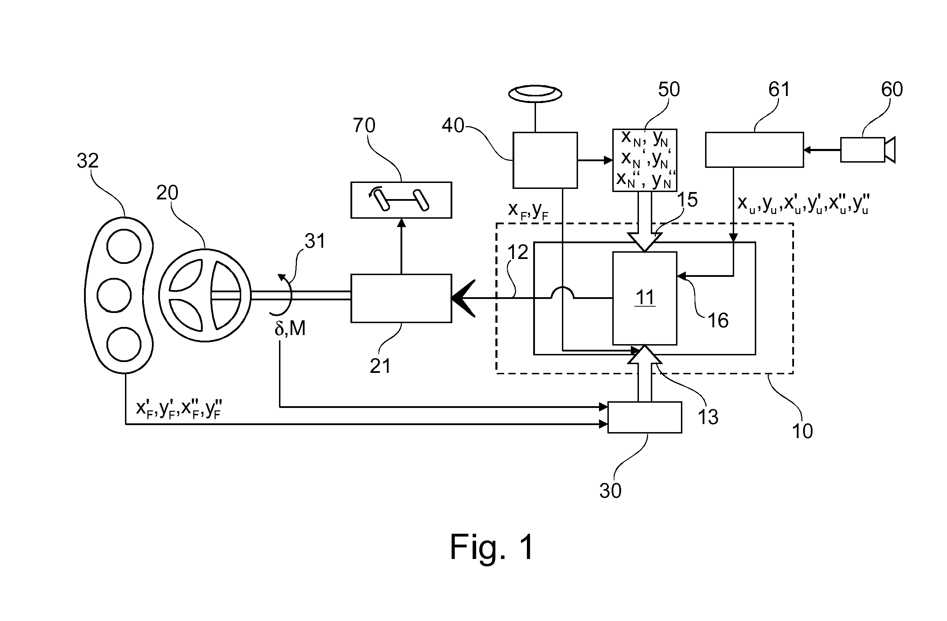

Figur 1 zeigt eine schematische Darstellung einer beispielhaften Ausführungsform der Erfindung. Die Assistenzvorrichtung 10 weist eine Steuereinheit 11 mit Schnittstellen auf. Zum einen besitzt die Steuereinheit eine Navigationsschnittstelle 15, die ausgelegt ist die vom Navigationssystem berechneten aktuellen Fahrtroutenparameter (x_{N}, y_{N}, x_{N}', y_{N}', x_{N}", y_{N}") zu empfangen. Zum anderen weist die Steuereinheit eine Fahrzeugparameterschnittstelle 13 auf, die Fahrzeugparameter wie Ort-Zeit-Zustandsinformation x_{F}, y_{F}, x_{F}', y_{F}', x_{F}", y_{F}" sowie Lenkparameter wie Lenkwinkel δ und Lenkmoment M von der Fahrzeugelektronikeinheit 30 empfangen. Dabei erfasst die Fahrzeugelektronik 30 die aktuelle Fahrsituation beispielsweise über Fahrzeugmesssensoren 32 wie das Tachometer für die Geschwindigkeit x_{F}',y_{F}' und Sensoren zur Messung der Querbeschleunigung. Das Positionsbestimmungssystem 40 kann die Ortsdaten des Fahrzeuges x_{F},y_{F} beispielsweise mit Hilfe eines GPS-Empfängers 40 ermitteln. Die ermittelte Position des Fahrzeuges kann sowohl über die Fahrzeugparameterschnittstelle 13 als auch indirekt über das Navigationssystem 50 und entsprechende Schnittstelle 15 der Steuereinheit 11 übermittelt werden.

An dieser Stelle sei angemerkt, dass die Datenübertragung zwischen den einzelnen Komponenten sowohl kabelgebunden als auch kabellos erfolgen kann.

Ferner ist die Möglichkeit gegeben, in die Auswertung der Navigationsroutendaten und Fahrzeugparameter auch Umfeldsensorendaten einfließen zu lassen. Über die Umfeldsensorenschnittstelle 16 kann die Steuereinheit 11 die Ort-Zeit-Zustandsinformationen x_{U}, y_{U}, x_{U}', y_{U}', x_{U}", y_{U}" eines potentiellen Hindernisses empfangen. Beispielhaft für einen Umfeldsensor ist eine Kamera 60 mit einer Auswerteelektronik 61 dargestellt. Dabei können auch mehrere Kameras am Fahrzeug installiert sein, um ein potentielles Hindernis und dessen Bewegung sowohl im vorderen Bereich einschließlich Seitenbereich als auch dem Rückraum des Fahrzeuges erfassen zu können. Für Fahrten in der Dunkelheit oder schlechter Witterung eignet sich beispielsweise der Einsatz von Infrarotkameras. Gerade in solchen schwierigen Fahrsituationen ist der Einsatz der erfindungsgemäßen Assistenzvorrichtung von großem Nutzen. Anstelle von Kamera können auch Strahlsensoren (Radar, Lidar) oder Kommunikationstechnik (Fahrzeug-zu-X Kommunikation, z.B. über den Kommunikationsstandard IEEE802.11p) eingesetzt werden.

Das auf Grundlage der erfassten Daten ermittelte Steuersignal wird über die Ausgangschnittstelle 12 an den Fahrer weitergegeben. Über eine Stelleinheit 21 kann beispielsweise das Lenkmoment M des Lenkrades 20 verändert werden. Die lenkbaren Vorderräder 70 eines Fahrzeuges werden über eine nicht dargestellte Lenkverbindung durch die Stelleinheit 21 eingestellt. Dabei kann die Stelleinheit 21 beispielsweise als Servomotor ausgeführt sein, der eine in der Steuereinheit 11 ermitteltes Zusatzmoment auf das Lenkrad 20 aufbringen kann.

In der Figur 1 erzeugt das mit dem Pfeil 31 angedeutete Handmoment eine Linksstellung der Vorderräder 70. Wird über das Steuersignal von der Steuereinheit ein Zusatzmoment aufgeschaltet, muss zur Beibehaltung des gleichen Lenkmomentes bzw. Einschlagwinkels der Vorderräder ein größeres bzw. kleineres Handmoment M vom Fahrer aufgebracht werden.

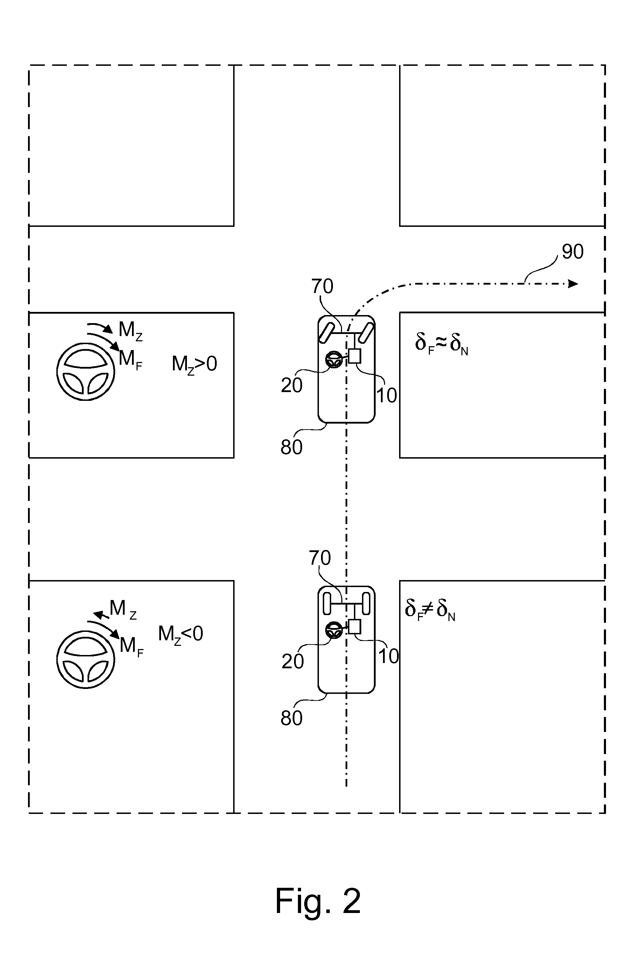

Das in Figur 2 dargestellte Schema zeigt am Beispiel eines vom Navigationssystem berechneten Abbiegemanövers und einem exemplarischen Fahrverhalten eines Kraftfahrzeugführers die Aufschaltung eines negativen Zusatzmomentes M_{Z} < 0 bzw. eines positiven Zusatzmomentes M_{Z} > 0 auf das Lenkrad 20. Figur 2 zeigt einen Kartenausschnitt mit 2 Kreuzungen, wobei sich das Kraftfahrzeug 80 auf der berechneten Fahrtroute 90 befindet.

Die Zieleingabe des Fahrzeugführers ergab, dass das Kraftfahrzeug an der in Fahrtrichtung zweiten Kreuzung rechts abbiegen soll. Die Assistenzvorrichtung 10 wertet in dem dargestellten Schema die empfangenen Daten jeweils kurz vor den Kreuzungen aus. In dem dargestellten Beispielsfall versteht der Fahrer die Anweisungen des Navigationssystems so, dass er irrtümlicherweise bereits an der ersten Kreuzung statt an der zweiten Kreuzung rechts abbiegen möchte. Daher ergibt der Vergleich der Fahrparameterdaten mit den Navigationsroutenparametern bei der ersten Kreuzung, und zwar der Vergleich des vom Fahrer eingestellten Lenkwinkels δ_{F}, mit dem von der Steuereinheit 11 berechneten Lenkwinkel δ_{N}, eine Abweichung: δ_{F} ≠ δ_{N}. Folglich erzeugt das ermittelte Steuersignal ein negatives Zusatzmoment (M_{Z} < 0)auf die Lenkung 20. Das leichte Gegenmoment M_{Z}, das dem Handmoment M_{F} des Fahrers entgegen gerichtet ist, wird schematisch durch die Pfeile und Pfeilrichtungen entlang des Lenkrades verdeutlicht (siehe Fallbeispiel M_{Z} < 0 Fig. 2 links unten). Figur 2 zeigt, dass das negative Zusatzmoment, einen Rechtseinschlag des Lenkrades und somit der Vorderräder 70 verhindert und dem Fahrer rechtzeitig signalisiert, nicht falsch in die erste Straße rechts einzubiegen soll und der korrekten Fahrtroute geradeaus zu folgen.

Weiterhin zeigt Figur 2, dass der Fahrer an der zweiten Kreuzung in die richtige Richtung lenkt (δ_{F} ≈ δ_{N}) und somit der berechneten Fahrtroute 90 korrekt folgt. Um dem Fahrer das Folgen zu erleichtern wird von der Assistenzvorrichtung 10 in diesem Fall ein positives Zusatzmoment M_{Z} > 0 auf die Lenkung 20 aufgeschaltet. Dies wird grafisch durch die vergrößerte Lenkradskizze M_{Z} > 0 und den gleichgerichteten Lenkmomentpfeilen des Handmomentes M_{H} und des Zusatzmomentes M_{Z} vereinfacht dargestellt. Die durch die Assistenzvorrichtung 10 unterstützte Lenkung resultiert eine korrekte Rechtstellung der Vorderräder 70.

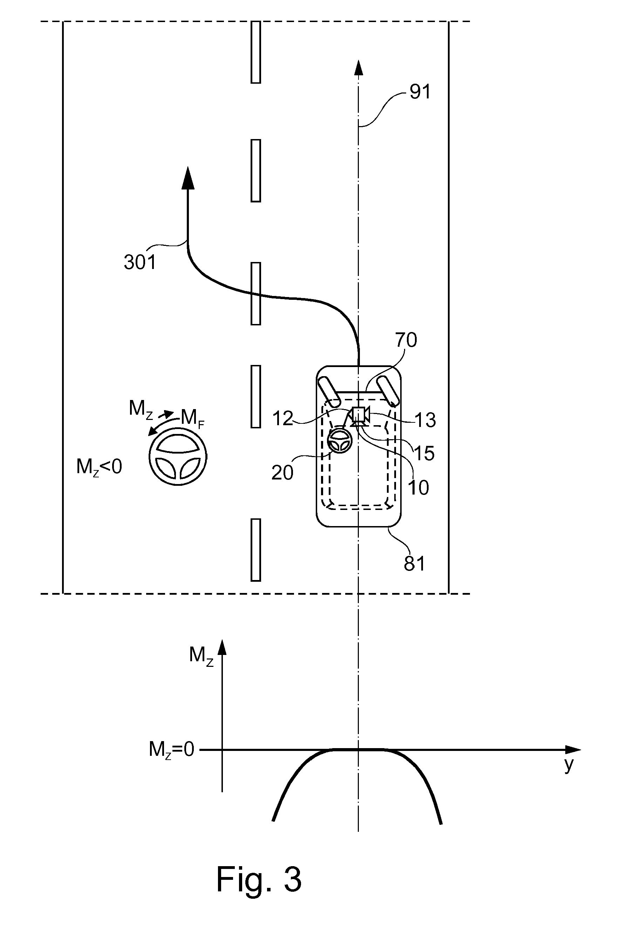

Figur 3 zeigt eine schematische Darstellung der Assistenzvorrichtungsfunktion am Beispiel eines Spurwechselmanövers. Der in Figur 3 dargestellte Fahrbahnausschnitt könnte beispielsweise eine zweispurige Stadtautobahn zeigen. In dem dargestellten Beispielsfall möchte der Kraftfahrzeugführer das Kraftfahrzeug 81 von der rechten Spur in die linke Spur lenken (vom Fahrer gewünschter Spurwechsel angedeutet durch Pfeil 301). Allerdings sieht die Zielroute 91 vor, die aktuelle Spur zu halten.

Die kontinuierliche Auswertung der über die Navigationsschnittstelle 15 und der Fahrparameterschnittstelle 13 erfassten Daten ergibt, dass der Lenkwinkel des Fahrers δ_{F} nicht mit dem für die berechnete Route notwendigen Lenkwinkel δ_{N} übereinstimmt. Daher wird dem Fahrer ein negatives Zusatzmoment M_{Z} < 0 auf die Lenkung aufgeschaltet. Dabei sind geringere Abweichung von der Zielspur mit geringen Gegenmomenten M_{Z} korreliert, wie in der Darstellung der Funktion M_{Z} in Abhängigkeit des Ortes y schematisch dargestellt ist. Die Funktionsskizze zeigt, dass beim Halten der Spur 91, kein Zusatzmoment aufgeschaltet wird, während beim Abkommen von der Spur das negative Zusatzmoment M_{Z} mit der Entfernung zur Spurmitte zunimmt.

In einem nicht dargestellten Fall könnte die Assistenzvorrichtung einen Spurwechsel allerdings unterstützen, nachdem Umfeldsensoren vor dem Fahrzeug ein Hindernis detektiert haben. Dies würde das Folgen der ursprünglichen Fahrtroute verhindern. In diesem Fall würde die Fahrtroute neu berechnet und der Linkseinschlag des Fahrers durch ein positives Zusatzmoment unterstützt werden.

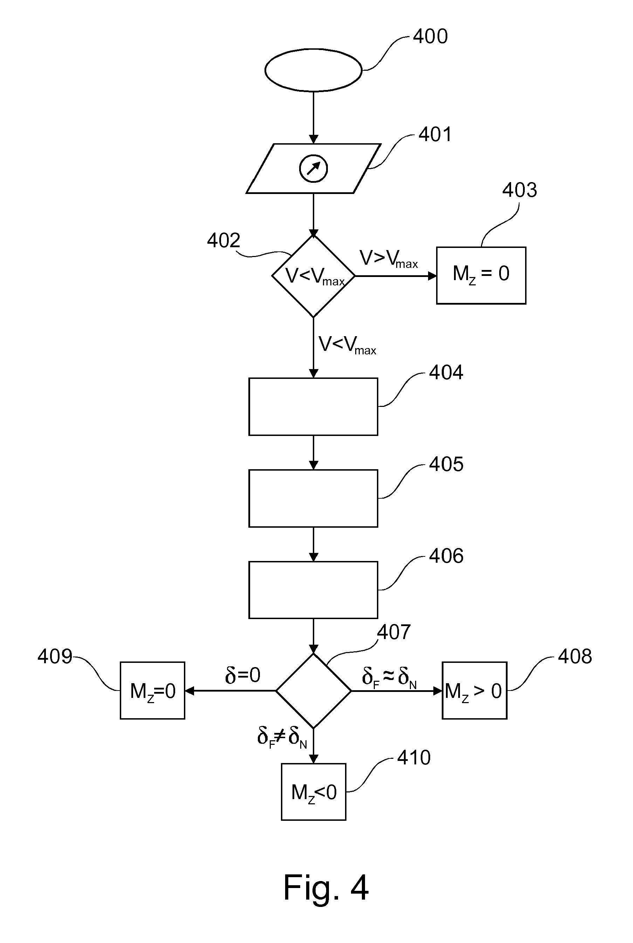

Die Figur 4 zeigt ein Assistenzverfahren gemäß einem Ausführungsbeispiel der Erfindung zur Routenführung eines mit einem Navigationssystem verbundenen Fahrzeuges, indem eine Steuereinheit ein Steuersignal für eine haptische Rückmeldung an den Fahrer des Fahrzeuges erzeugt, wobei das erzeugte Signal ein Folgen einer vom Navigationssystem berechneten Route erleichtert.

Im Schritt 400 beginnt das Verfahren zur unterstützten Routenführung, indem der Fahrzeugführer eine Zieleingabe in das mit dem Fahrzeug verbundene Navigationssystem eingibt. Im Schritt 401 wird eine Messsensorinformation wie beispielsweise die Fahrzeuggeschwindigkeit oder Querbeschleunigung erfasst. Danach wird im Schritt 402 die Messinformation v (Istwert) mit dem vorgegebenen Grenzwert vₘₐₓ Durch die Steuereinheit verglichen. Ist der Istwert v größer als der Grenzwert vₘₐₓ, wie z.B. bei sportlichen Fahrverhalten, wird das Steuersignal in Form eines Zusatzmomentes auf die Lenkung von der Steuereinheit nicht ausgegeben (M_{Z}=0). Ist der Istwert v kleiner als der Sollwert vₘₐₓ, wird der nächste Verfahrensschritt 404 eingeleitet, nämlich das Erfassen einer entsprechend der Fahrtroute berechneten Ort-Zeit-Zustandsinformation des Fahrzeuges vom Navigationssystem (x_{N}, y_{N}, x_{N}', y_{N}', x_{N}", y_{N}"). Daraufhin folgt der Verfahrensschritt 405, der das Erfassen einer Ort-Zeit-Zustands-Information (x_{F}, y_{F}, x_{F}', Y_{F}', x_{F}", Y_{F}") sowie Lenkparameter (δ_{F}, M_{F}) eines Fahrzeuges beinhaltet. Im Schritt 406 wird die erfassten Ort-Zeit-Zustandsinformation des Navigationssystems (x_{N}, y_{N}, x_{N}', y _{N}', x_{N}", y_{N}") und die Fahrzeugparameter (x_{F}, y_{F}, x_{F}', y_{F}', x_{F}", y_{F}", δ_{F}, M_{F}) ausgewertet und somit ein für das Folgen der Route benötigte Lenkwinkel δ_{N} berechnet. Im folgenden Verfahrensschritt wird der berechnete δ_{N} mit dem aktuellen δ_{F} verglichen. In dem Fall, dass der Fahrer keine Handmoment zur Lenkung betätigt hat, kann wie in Schritt 409 gezeigt, kein Zusatzmoment (M_{Z}=0) aufgeschaltet werden. Verfahrensschritt 408 zeigt den Fall, wenn der Fahrer in die Richtung des vom Navigationssystem berechneten Lenkwinkels lenkt (δ_{F} ≈ δ_{N}), in anderen Worten der Route gefolgt wird. Dies wird durch Ausgeben eines positiven Zusatzmomentes (M_{Z}>0) auf die Lenkung unterstützt. Im Fall, dass die Lenkwinkel nicht übereinstimmen und voneinander abweichen, wie z.B. in dem Fall wenn der Fahrer zu früh abbiegen möchte, tritt der Verfahrensschritt 410 ein, indem ein negatives Zusatzmoment (M_{Z} < 0) auf die Lenkung gegeben wird.

Das gleiche Verfahren ist anwendbar auf eine andere haptische Rückmeldung wie z.B. Vibration am Lenkrad. Hierbei kann bei Erreichen oder Überschreiten eines Grenzwerts im Verfahrensschritt 403 ein Warnsignal ausgegeben werden.

Ergänzend sei darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Assistenzvorrichtung (10) zur Routenführung eines mit einem Navigationssystem (50) verbundenen Fahrzeuges (81), wobei die Assistenzvorrichtung (10) aufweist:
eine Steuereinheit(11) zum Erzeugen eines Steuersignals für eine haptische Rückmeldung an den Fahrer des Fahrzeuges, wobei die haptische Rückmeldung dem Fahrer ein Folgen einer von dem Navigationssystem berechneten Route erleichtert,
wobei die Steuereinheit(11) bei einer Abweichung von der berechneten Route ein negatives Zusatzmoment (M_{Z} < 0) auf die Lenkung derart hinzufügt, dass zur Beibehaltung oder Erhöhung des Lenkmoments ein höheres manuelles Moment in die Lenkung eingeleitet werden muss **dadurch gekennzeichnet dass** die Steuereinheit (11) ausgelegt ist, in Richtung der berechneten Route ein positives Zusatzmoment (M_{Z} > 0) auf die Lenkung zur Erleichterung der Lenkung des Fahrzeuges hinzuzufügen.

2. Assistenzvorrichtung nach Anspruch 1, wobei die haptische Rückmeldung eine Vibration des Lenkrades (20) aufweist.

3. Assistenzvorrichtung nach einem der Ansprüche 1 oder 2, wobei die haptische Rückmeldung ein Zusatzmoment (M_{Z}) auf die Lenkung des Fahrzeuges aufweist.

4. Assistenzvorrichtung (10) nach einem der Ansprüche 1 bis3, wobei die Steuereinheit ausgelegt ist, ein positives Zusatzmoment (M_{Z} > 0) vor und während vom Navigationssystem berechneter Manöver auszugeben, wobei die Manöver ausgewählt sind aus einer Gruppe bestehend aus:
einen Lenkwinkel (δ) größer als ein benutzerdefinierter Grenzwert;
ein Abbiegemanöver; und
ein Spurwechsel.

5. Eine Assistenzvorrichtung (10)nach einem der Ansprüche 1 bis4, ferner aufweisend:
eine Navigationssystemschnittstelle (15), die ausgelegt ist als Eingangsschnittstelle zum Empfang vom Navigationssystem berechneten aktuellen Fahrtroutenparameter (x_{N}, y_{N}, x_{N}', y_{N}', x_{N}", y_{N}") ; und
eine Fahrzeugparameterschnittstelle (13), die ausgelegt ist als Eingangsschnittstelle zum Empfang von Fahrzeugparametern wie Ort-Zeit-Zustandsinformation (x_{F}, y_{F}, x_{F}'_{,} y_{F}', x_{F}", y_{F}"), Lenkwinkel δ_{F} und Lenkmoment M_{F} eines Fahrzeuges.

6. Eine Assistenzvorrichtung nach einem der Ansprüche 1 bis5, ferner aufweisend:
eine Umfeldsensorenschnittstelle (16), die ausgelegt ist, Ort-Zeit-Zustandsinformationen (x_{U}, y_{U}, x_{U}', y_{U}', x_{U}", y_{U}") eines potentiellen Hindernisses zu empfangen.

7. Eine Assistenzvorrichtung nach einem der Ansprüche 1 bis6, wobei die Steuereinheit (11) ausgelegt ist, die Fahrzeugparameter (x_{F}, y_{F}, x_{F}', y_{F}', x_{F}", y_{F}", δ_{F}, M_{F}) und Daten eines potentiellen Hindernisses (x_{U}, y_{U}, x_{U}', y_{U}', x_{U}", y_{U}") relativ zu den berechneten Fahrtroutenparametern (x_{N}, y_{N}, x_{N}', y_{N}', x_{N}", y_{N}") auszuwerten und Lenkparameter wie routenspezifischer Lenkwinkel δ_{N} und Zusatzmoment M_{Z} zu ermitteln und nur ein Steuersignal an eine Stelleinheit der Lenkung (21) des Fahrzeuges über eine Ausgangsschnittstelle (12) auszugeben, wenn die Umfeldsensorendaten (x_{U}, y_{U}, x_{U}', y_{U}', x_{U}", y_{U}") kein Hindernis auf der berechneten Fahrtroute ermittelt haben.

8. Assistenzvorrichtung nach einem der Ansprüche 1, 3 bis7, wobei die Steuereinheit ausgelegt ist die Ausgabe eines positiven Zusatzmomentes (M_{Z} > 0) an die Ausgangsschnittstelle zu blockieren, wenn eine Maximalgeschwindigkeit (xₘₐₓ',yₘₐₓ') überschritten wurde.

9. Assistenzvorrichtung nach einem der Ansprüche 1 bis8, wobei die haptische Rückmeldung eine Vibration eines aktiven Gaspedals aufweist.

10. Assistenzvorrichtung nach einem der Ansprüche 1 bis9, wobei die haptische Rückmeldung eine Zusatzkraft auf das Gaspedal des Fahrzeuges aufweist.

11. Assistenzsystem aufweisend:
eine Assistenzvorrichtung (10) nach einem der Ansprüche 1 bis10;
ein Navigationssystem (50);
ein Positionsbestimmungssystem (40);
Fahrzeugsensoren (31, 32); und
einen Servomotor (21).

12. Kraftfahrzeug aufweisend:
eine Assistenzvorrichtung nach einem der Ansprüche 1 bis10.

13. Assistenzverfahren zur Routenführung eines mit einem Navigationssystem (50) verbundenen Fahrzeuges, wobei das Assistenzverfahren den folgenden Schritt aufweist:
Erzeugen eines Steuersignals für eine haptische Rückmeldung an den Fahrer des Fahrzeuges, wobei die haptische Rückmeldung dem Fahrer ein Folgen einer von dem Navigationssystem berechneten Route erleichtert,
wobei die Steuereinheit(11) bei einer Abweichung von der berechneten Route ein negatives Zusatzmoment (M_{Z} < 0) auf die Lenkung derart hinzufügt, dass zur Beibehaltung oder Erhöhung des Lenkmoments ein höheres manuelles Moment in die Lenkung eingeleitet werden muss **dadurch gekennzeichnet dass** die Steuereinheit (11) ausgelegt ist, in Richtung der berechneten Route ein positives Zusatzmoment (M_{Z} > 0) auf die Lenkung zur Erleichterung der Lenkung des Fahrzeuges hinzuzufügen.

14. Assistenzverfahren nach Anspruch 13, wobei das Assistenzverfahren aufweist:
Erfassen einer entsprechend der Fahrtroute berechneten Ort-Zeit-Zustandsinformation des Fahrzeuges vom Navigationssystem (x_{N}, y_{N}, X_{N}', y_{N}', x_{N}", y_{N}");
Erfassen einer Ort-Zeit-Zustands-Information (x_{F}, y_{F}, x_{F}', Y_{F}', x_{F}", y_{F}") sowie Lenkparameter (δ_{F}, M_{F}) eines Fahrzeuges;
Auswerten der erfassten Ort-Zeit-Zustandsinformation des Navigationssystems (x_{N}, y_{N}, x_{N}', y_{N}', x_{N}", y_{N}") und der Fahrzeugparameter (x_{F}, y_{F}, x_{F}', y_{F}', x_{F}", y_{F}", δ_{F}, M_{F}) ;
Ermitteln und Ausgeben eines Zusatzmomentes (M_{Z}) auf die Lenkung des Fahrzeuges, wobei das Zusatzmoment bei einer Abweichung von der Fahrtroute negativ ist (M_{Z} < 0) und beim Folgen der berechneten Richtung der Navigationsroute positiv (M_{Z} > 0) ist.

15. Computerprogrammelement, das wenn es durch einen Prozessor ausgeführt wird, den Prozessor anleitet ein Assistenzverfahren nach Anspruch 13 auszuführen.

16. Computerlesbares Speichermedium, auf dem ein Computerprogrammelement gespeichert ist, das wenn es auf einem Prozessor ausgeführt wird, den Prozessor anleitet ein Assistenzverfahren nach Anspruch 13 auszuführen.

## Claims

1. An assisting device (10) for route guidance of a vehicle (81) connected to a navigation system (50), the assisting device (10) comprising:
a control unit (11) for generating a control signal for a haptic feedback to the driver of the vehicle, wherein the haptic feedback makes it easier for the driver to follow a route calculated by the navigation system,
wherein the control unit (11) adds a negative additional moment (M_{Z} < 0) onto the steering when the vehicle departs from the calculated route in such a manner that to maintain or increase the steering moment a higher manual moment must be transmitted into the steering, **characterized in that** the control unit (11) is configured to add a positive additional moment (M_{Z} > 0) onto the steering in the direction of the calculated route to facilitate the steering of the vehicle.

2. The assisting device according to Claim 1, the haptic feedback comprising a vibration of the steering wheel (20).

3. The assisting device according to any one of Claims 1 or 2, the haptic feedback comprising an additional moment (M_{Z}) on the steering system of the vehicle.

4. The assisting device (10) according to any one of Claims 1 to 3, the control unit being configured to output a positive additional moment (M_{Z} > 0) before and during maneuvers calculated by the navigation system, the maneuvers being selected from a group consisting of:
a steering angle (δ) larger than a user-defined limit value;
a turning maneuver; and
a lane change.

5. An assisting device (10) according to any one of Claims 1 to 4, further comprising:
a navigation system interface (15) which is embodied as an input interface for receiving current travel route parameters (x_{N}, y_{N}, x_{N}', y_{N}', x_{N}", y_{N}") calculated by the navigation system; and
a vehicle parameter interface (13) which is embodied as an input interface for receiving vehicle parameters such as location-time-condition information (x_{F}, y_{F}, x_{F}', y_{F}', x_{F}", y_{F}"), a steering angle δ_{F} and a steering moment M_{F} of a vehicle.

6. An assisting device according to any one of Claims 1 to 5, further comprising:
a surrounding field sensor interface (16) which is configured to receive location-time-condition information (xᵤ, yᵤ, xᵤ', yᵤ', Xᵤ", Yᵤ") of a potential obstacle.

7. An assisting device according to any one of Claims 1 to 6, the control unit (11) being configured to evaluate the vehicle parameters (x_{F}, y_{F}, x_{F}', Y_{F}', x_{F}", Y_{F}", δ_{F}, M_{F}) and data of a potential obstacle (xᵤ, yᵤ, xᵤ', yᵤ', xᵤ", yᵤ") relative to the calculated travel route parameters (x_{N}, y_{N}, x_{N}', y_{N}', x_{N}", y_{N}") and to determine steering parameters such as the route-specific steering angle δ_{F} and additional moment M_{z} and to output only one control signal to an actuator of the steering system (21) of the vehicle via an output interface (12), if data from the surrounding field sensor (xᵤ, yᵤ, xᵤ', yᵤ', xᵤ", yᵤ") does not indicate an obstacle on the calculated travel route.

8. The assisting device according to any one of Claims 1, 3 to 7, the control unit being configured to block the output of a positive additional moment (M_{z} > 0) to the output interface, if a maximum speed (xₘₐₓ', yₘₐₓ') has been exceeded.

9. The assisting device according to any one of Claims 1 to 8, the haptic feedback comprising a vibration of an active accelerator.

10. The assisting device according to any one of Claims 1 to 9, the haptic feedback comprising an additional force on the accelerator of the vehicle.

11. An assisting system comprising:
an assisting device (10) according to any one of Claims 1 to 10;
a navigation system (50);
a position indicating system (40);
vehicle sensors (31, 32); and
a servo-motor (21).

12. A motor vehicle comprising:
an assisting device according to any one of Claims 1 to 10.

13. An assisting method for route guidance of a vehicle connected to a navigation system (50), the assisting method comprising the following step:
generating of a control signal for a haptic feedback to the driver of the vehicle, wherein the haptic feedback makes it easier for the driver to follow a route calculated by the navigation system,
wherein the control unit (11) adds a negative additional moment (M_{z} < 0) onto the steering when the vehicle departs from the calculated route in such a manner that to maintain or increase the steering moment a higher manual moment must be transmitted into the steering, **characterized in that** the control unit (11) is configured to add a positive additional moment (M_{z} > 0) onto the steering in the direction of the calculated route to facilitate the steering of the vehicle.

14. An assisting method according to Claim 13, the assisting method comprising the steps of:
detecting location-time-condition information calculated according to the travel route of the vehicle by the navigation system (x_{N}, y_{N}, x_{N}', y_{N}', x_{N}", y_{N}");
detecting location-time-condition information (x_{F}, y_{F}, X_{F}' , y_{F}', x_{F}", y_{F}") as well as steering parameters (δ_{F}, M_{F}) of a vehicle;
evaluating the detected location-time-condition information of the navigation system (x_{N}, y_{N}, x_{N}', y_{N}', x_{N}", y_{N}") and of vehicle parameters (x_{F}, y_{F}, X_{F}', Y_{F}', x_{F}", y_{F}", δ_{F}, M_{F});
determining and outputting an additional moment (M_{Z}) to the steering system of the vehicle, the additional moment being negative (M_{z} < 0) when the vehicle departs from the travel route and being positive (M_{z} > 0) when the vehicle follows the calculated direction of the navigation route.

15. A computer program element, which, if implemented by a processor, instructs the processor to carry out an assisting method according to Claim 13.

16. A computer-readable storage medium, on which a computer program element is stored, which, if implemented on a processor, instructs the processor to carry out an assisting method according to Claim 13.

## Revendications

1. Dispositif d'assistance (10) au guidage routier d'un véhicule (81) relié à un système de navigation (50), le dispositif d'assistance (10) comprenant :
une unité de commande (11) pour la production d'un signal de commande pour une rétro-information haptique destinée au conducteur du véhicule, la rétro-information haptique aidant le conducteur à suivre un itinéraire calculé par le système de navigation (50),
l'unité de commande (11) ajoutant, en cas d'écart à l'itinéraire calculé, un couple supplémentaire négatif (M_{z} < 0) sur la direction de telle sorte que, pour maintenir ou augmenter le couple de braquage, il est nécessaire d'introduire un couple manuel plus élevé dans la direction, **caractérisé en ce que** l'unité de commande (11) est conçue pour, dans la direction de l'itinéraire calculé, ajouter un couple supplémentaire positif (M_{z} > 0) sur la direction pour faciliter le braquage du véhicule.

2. Dispositif d'assistance selon la revendication 1, la rétro-information haptique présentant une vibration du volant de direction (20).

3. Dispositif d'assistance selon une des revendications 1 ou 2, la rétro-information haptique présentant un couple supplémentaire (M_{z}) sur la direction du véhicule.

4. Dispositif d'assistance selon l'une des revendications 1 à 3, l'unité de commande étant conçue pour délivrer un couple supplémentaire positif (M_{z} > 0) avant et pendant la manoeuvre calculée par le système de navigation, les manoeuvres étant sélectionnées parmi un groupe composé de :
un angle de braquage (δ) supérieur à une valeur limite définie par l'utilisateur ;
une manoeuvre de virage ; et
un changement de voie.

5. Dispositif d'assistance selon l'une des revendications 1 à 4, présentant également :
une interface de système de navigation (15), qui est conçue en tant qu'interface d'entrée pour la réception du paramètre d'itinéraire routier (x_{N}, y_{N}, x_{N}' , y_{N}', x_{N}", y_{N}") actuel calculé par le système de navigation ; et
une interface de paramètres de véhicule (13), qui est conçue en tant qu'interface d'entrée pour la réception de paramètres de véhicule tels qu'une information d'état de lieu - de temps (x_{F}, y_{F}, x_{F}', y_{F}', x_{F}", y_{F}"), un angle de braquage δ_{F} et un couple de braquage M_{F} d'un véhicule.

6. Dispositif d'assistance selon l'une des revendications 1 à 5, présentant également :
une interface de capteurs d'environnement (16), qui est conçue pour recevoir des informations d'état de lieu - de temps (xᵤ, yᵤ, xᵤ', yᵤ', Xᵤ", Yᵤ") d'un obstacle potentiel.

7. Dispositif d'assistance selon l'une des revendications 1 à 6, l'unité de commande (11) étant conçue pour analyser les paramètres de véhicule (x_{F}, y_{F}, x_{F}', Y_{F}', x_{F}", Y_{F}", δ_{F}" M_{F}) et des données d'un obstacle potentiel (xᵤ, yᵤ, xᵤ', yᵤ', xᵤ", yᵤ") par rapport aux paramètre d'itinéraire routire (x_{N}, y_{N}, x_{N}', Y_{N}', x_{N}", y_{N}") et pour déterminer des paramètres de braquage tels que des angles de braquage δ_{F} spécifiques à l'itinéraire et un couple supplémentaire M_{z} et pour ne délivrer un signal de commande à une unité de réglage de la direction (21) du véhicule via une interface de sortie (12) que si les données de capteurs d'environnement (xᵤ, yᵤ, xᵤ', yᵤ', xᵤ", yᵤ") n'ont déterminé aucun obstacle sur l'itinéraire routier calculé.

8. Dispositif d'assistance selon l'une des revendications 1, 3 à 7, l'unité de commande étant conçue pour bloquer la délivrance d'un couple supplémentaire positif (M_{z} > 0) à l'interface de sortie quand une vitesse maximale (xₘₐₓ', yₘₐₓ') a été dépassée.

9. Dispositif d'assistance selon l'une des revendications 1 à 8, la rétro-information haptique présentant une vibration d'une pédale de l'accélérateur active.

10. Dispositif d'assistance selon l'une des revendications 1 à 9, la rétro-information haptique présentant une force supplémentaire sur la pédale de l'accélérateur du véhicule.

11. Système d'assistance, présentant:
un dispositif d'assistance (10) selon l'une des revendications 1 à 10 ;
un système de navigation (50) ;
un système de détermination de position (40);
des capteurs de véhicule (31, 32); et
un servomoteur (21).

12. Véhicule, présentant:
un dispositif d'assistance selon l'une des revendications 1 à 10.

13. Procédé d'assistance au guidage routier d'un véhicule relié à un système de navigation (50), le procédé d'assistance présentant l'étape suivante:
production d'un signal de commande pour une rétro-information haptique destinée au conducteur du véhicule, la rétro-information haptique aidant le conducteur à suivre un itinéraire calculé par le système de navigation, l'unité de commande (11) ajoutant, en cas d'écart à l'itinéraire calculé, un couple supplémentaire négatif (M_{z} < 0) sur la direction de telle sorte que, pour maintenir ou augmenter le couple de braquage, il est nécessaire d'introduire un couple manuel plus élevé dans la direction, **caractérisé en ce que** l'unité de commande (11) est conçue pour, dans la direction de l'itinéraire calculé, ajouter un couple supplémentaire positif (M_{z} > 0) sur la direction pour faciliter le braquage du véhicule.

14. Procédé d'assistance selon la revendication 13, le procédé d'assistance présentant:
la saisie d'une information d'état de lieu - de temps (x_{N}, y_{N}, x_{N}', y_{N}', x_{N}", y_{N}") du véhicule calculée en fonction de l'itinéraire routier par le système de navigation ;
la saisie d'une information d'état de lieu - de temps (x_{F}, y_{F}, x_{F}', y_{F}', x_{F}", y_{F}") ainsi que de paramètres de braquage (δ_{F}, M_{F}) d'un véhicule ;
l'analyse de l'information d'état de lieu - de temps (x_{N}, y_{N}, x_{N}', y_{N}', x_{N}", y_{N}") saisie du système de navigation et des paramètres de véhicule (x_{F}, y_{F}, X_{F}', Y_{F}', x_{F}", Y_{F}", δ_{F}, M_{F});
la détermination et la délivrance d'un couple supplémentaire (M_{z}) sur la direction du véhicule, le couple supplémentaire étant négatif (M_{z} < 0) en cas d'écart à l'itinéraire routier et étant positif (M_{z} > 0) en cas de suivi de la direction calculée de l'itinéraire de navigation.

15. Elément de programme informatique qui, quand il est exécuté par un processeur, pilote le processeur pour exécuter un procédé d'assistance selon la revendication 13.

16. Support de mémoire lisible par ordinateur, sur lequel est enregistré un élément de programme informatique qui, quand il est exécuté sur un processeur, pilote le processeur pour exécuter un procédé d'assistance selon la revendication 13.
